# EUROPÄISCHE PATENTSCHRIFT

(11) **EP 1 512 876 B1**
(45) Veröffentlichungstag und Bekanntmachung des Hinweises auf die Patenterteilung: **04.01.2006**
(21) Anmeldenummer: 03026165.5
(22) Anmeldetag: 17.11.2003
(51) Int. Cl.: F16B 35/06

(54) **Senkkopfschraube**
Countersunk screw
Vis fraisée

(30) Priorität: 05.09.2003 DE 20313819 U
(43) Veröffentlichungstag der Anmeldung: 09.03.2005
(73) Patentinhaber: A-Z Ausrüstung und Zubehör GmbH & Co. KG, 45525 Hattingen (DE)
(72) Erfinder: Dicke, Robert, Dipl.-Ing., 58256 Ennepetal (DE)
(74) Vertreter: Patentanwälte Dr. Solf & Zapf

(56) Entgegenhaltungen:
- US-A- 5 772 376
- US-E- R E36 741

## Beschreibung

Die vorliegende Erfindung betrifft eine Senkkopfschraube gemäß Oberbegriff des Anspruchs 1 (US-A-5 772 376).

Senkkopfschrauben sind in zahlreichen Ausführungen bekannt. Der Senkkopf kann als Flach- oder Linsensenkkopf ausgebildet sein. Solche Schrauben werden einerseits zum Befestigen von Beschlägen oder dergleichen Bauteilen insbesondere aus Metall verwendet, wobei das jeweilige Bauteil für jede Schraube ein angesenktes Befestigungsloch aufweist, dessen Senkwinkel in der Regel bzw. normgemäß etwa 90° beträgt. Andererseits werden solche Senkkopfschrauben auch in großen Stückzahlen für sogenannte Holz-Holzverbindungen eingesetzt, indem sie ohne Vorbohren direkt eingeschraubt werden. Dabei soll sich der Senkkopf selbsttätig in das jeweilige Material eindrücken und versenken. Bei dem letzteren Anwendungsfall tritt aber aufgrund des Senkwinkels von 90° bei Holz-Hotzverbindungen ein Spleißen des Holzes auf. Dies wird durch Schrauben mit einem entsprechend geringeren (steileren) Senkwinkel vermieden; diese Schrauben sind jedoch nicht zum Befestigen von Bauteilen mit 90°-Senklöchem geeignet, weil sie nicht mit einer hinreichend großen Fläche in dem Senkloch zu Anlage kommen, was auch für die Befestigung des Bauteils Nachteile hat

Eine solche Senkkopfschraube der zuletzt beschriebenen Art ist in dem Dokument US-A-5 772 376 bzw. der korrespondierendon. EP 0 781 382 B1 beschrieben. Die auf der mit relativ steilem Senkwinkel ausgebildeten Kegelfläche vorgesehenen, sehr schmalen Rippen weisen Senkschneiden auf, so dass die Schraube in der Lage ist, mittels der Rippen in einem Werkstück eine Senkung für den Senkkopf freizuschneiden. Diese Schraube eignet sich deshalb nicht zum Befestigen von Beschlägen oder dergleichen mit 90°-Senklöchem, weil dabei die Rippen mit ihren Senkschneiden Oberflächenbeschädigungen verursachen und sich mit ihren sehr schmalen Flächen eindrücken würden.

Der vorliegenden Erfindung liegt die Aufgabe zugrunde, eine Senkkopfschraube der genannten Art zu schaffen, die - praktisch als "Universalschraube" - für beide beschriebenen Anwendungsfälle mit guten Gebrauchseigenschaften geeignet ist.

Erfindungsgemäß wird dies durch die Merkmale des Anspruchs 1. erreicht. Weitere vorteilhafte Ausgestaltungsmerkmale der Erfindung sind in den Unteransprüchen enthalten.

Demnach weist die Kegelfläche mindestens drei über den Umfang verteilt angeordnete, d. h. in Umfangsrichtung voneinander beabstandete, rippenartige Rippenansätze mit äußeren, gemeinsam eine kegelförmige Hüllfläche mit einem Konuswinkel definierenden und erfindungsgemäß relativ groß dimensonierten Anlageflächen auf. Dies bedeutet, dass erfindungsgemäß das Flächenverhältnis der Summe der Anlageflächen aller Rippenansätze zu der Summe der jeweils dazwischen liegenden Bereiche der Kegelfläche derart ausgelegt ist, dass einerseits die Rippenansätze nicht ein direktes Einsenken des Senkkopfes in Holz oder dergleichen Weichstoff behindern, und dass andererseits beim Befestigen von Bauteilen mit Senklöchern zwischen den Rippenansätzen und dem jeweiligen Senkloch eine bestimmte, werkstoff-spezifisch bzw. in Abhängigkeit von der Werkstoffkombination Schraube-Bauteil (insbesondere Metall-Metall) so ausgelegte Flächenpressung erreicht wird, dass Oberflächenbeschädigungen im Bereich des Senkloches des Bauteils vermieden werden. Dabei kann beim Anziehen der Schraube eine hohe Haltekraft ohne Beschädigungsgefahr über die Anlageflächen in das jeweilige Bauteil eingeleitet werden. Gleichzeitig sind die Rippenansätze derart gestaltet, dass sie bei der erstgenannten Anwendung mit direktem, versenkendem Einschrauben in ein relativ weiches Material, wie insbesondere Holz oder einen ähnlichen Weichstoff, eine Fräswirkung (Schabeffekt) haben. Dies trägt zu einem guten Versenken des Kopfes mit minimaler Spleißgefahr und geringem Eindrehmoment bei. Wegen der erfindungsgemäßen Auslegung der Anlageflächen der Rippenansätze tritt diese Fräswirkung bei der Beschlagbefestigung nicht oder nur unbedeutend auf.

Der Senkwinkel der Kegelfläche ist kleiner als der Konuswinkel der Hüllfläche der Rippenansätze. In bevorzugter Ausgestaltung ist der Senkwinkel relativ klein bzw. steil ausgebildet; er liegt etwa im Bereich von 50° bis 60° und beträgt insbesondere etwa 53° bis 55°. Dieser Senkwinkel ist besonders vorteilhaft für ein direktes Einschrauben in Holz mit reduzierter Spleißgefahr beim Einsenken. Demgegenüber beträgt der Konuswinkel der Rippenansätze etwa 90°, was von Vorteil zur Befestigung von Beschlägen und dergleichen Bauteilen mit angesenkten Befestigungslöchern ist, die einen Senkwinkel von ebenfalls etwa 90° aufweisen.

Anhand von in der Zeichnung veranschaulichten, bevorzugten Ausführungsbeispielen soll die Erfindung genauer erläutert werden. Dabei zeigen:
- Fig. 1: eine Teil-Seitenansicht einer erfindungsgemäßen Senkkopfschraube im Bereich des Senkkopfes und eines Teils des sich anschließenden Gewindeschaftes,
- Fig. 2: eine Schnittansicht in Pfeilrichtung II - II gemäß Fig. 1,
- Fig. 3: einen Teilschnitt durch den Bereich eines der erfindungsgemäßen Rippenansätze in der Ebene III - III gemäß Fig. 2 und
- Fig. 4: eine Darstellung analog zu Fig. 2 in einer Ausführungsvariante.

Eine erfindungsgemäße Senkkopfschraube 1 weist einen Gewindeschaft 2 mit einem Senkkopf 4 auf. Anderendig geht der Gewindeschaft 2 in eine nicht dargestellte Schraubenspitze über. Der Senkkopf 4 weist eine in Richtung auf den Gewindeschaft 2 mit einem bestimmten Senkwinkel α zulaufende Kegelfläche 6 auf.

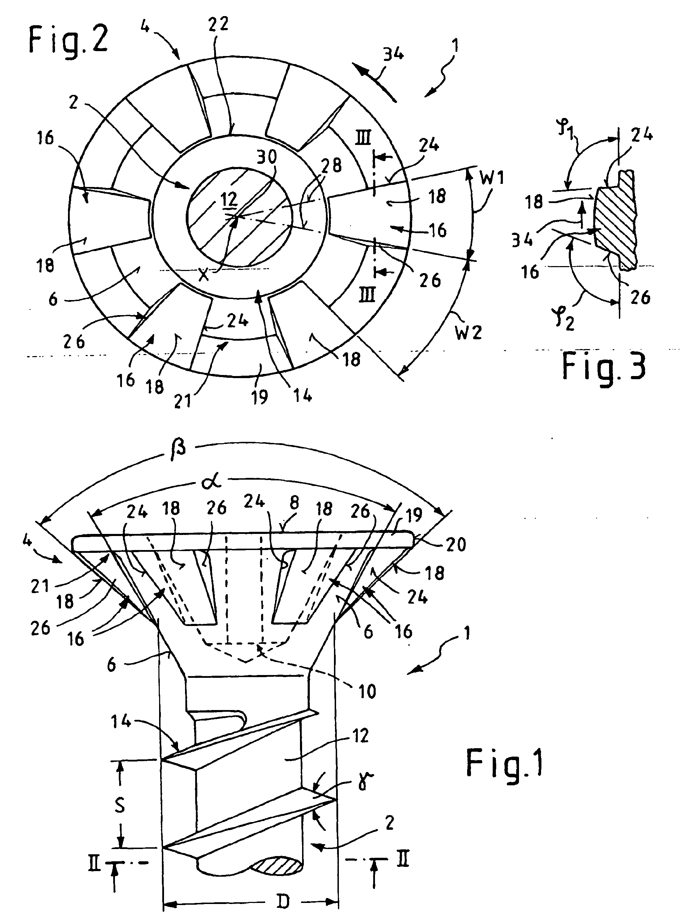

Bei dem dargestellten Ausführungsbeispiel handelt es sich bei dem Senkkopf 4 um einen Flachsenkkopf, der auf seiner dem Gewindeschaft 2 entgegengesetzten Seite eine ebene Fläche 8 aufweist. Alternativ kann der Senkkopf 4 aber auch als sogenannter Linsensenkopf mit einer konvex gekrümmten Fläche ausgeführt sein. In beiden Fällen kann der Senkkopf 4 bevorzugt einen in Fig. 1 gestrichelt angedeuteten Innenkraftangriff 10 aufweisen, und zwar insbesondere in Form eines Kreuzschlitzes oder eines Innenstemangriffs, vorzugsweise mit Schlüsselführung.

Der Gewindeschaft 2 besteht aus einem zumindest abschnittsweise zylindrischen Kern 12 und einem als Erhebung schraubenlinienförmig über den Kem 12 verlaufenden, ein-oder mehrgängigen Gewinde 14. Das Gewinde 14 definiert mit seiner äußeren Gewindekante einen Gewinde-Nenndurchmesser D. Die Gewindesteigung ist in Fig. 1 mit S eingezeichnet.

Erfindungsgemäß sind auf der Kegelfläche 6 mindestens drei Rippenansätze 16 über den Umfang verteilt und jeweils voneinander beabstandet angeordnet. Diese Rippenansätze 16 weisen äußere Anlageflächen 18 auf, die gemeinsam eine konische Hüllfläche mit einem Konuswinkel β definieren (Fig. 1). Die Anlagefläche 18 jedes Konusansatzes 16 bildet somit einen Teil einer Konusfläche mit dem Konuswinkel β. Dabei ist erfindungsgemäß vorgesehen, dass der Senkwinkel α der Kegelfläche 6 kleiner als der Konuswinkel β der Hüllfläche der Rippenansätze 16 ist. Für eine universelle bzw. wahlweise Anwendung der Senkkopfschraube 1 in den oben beschriebenen Anwendungsfällen ist es vorteilhaft, wenn der Senkwinkel α relativ steil ist und etwa im Bereich von 50° bis 60° liegt. Für ein direktes Einschrauben in Holz mit Einsenken des Senkkopfes 4 ohne oder zumindest mit reduzierter Spleißgefahr ist ein Wert des Senkwinkels α von 53° bis 55° besonders vorteilhaft. Der Konuswinkel β beträgt 90° und entspricht damit dem üblichen bzw. genormten Senkwinkel von angesenkten Befestigungslöchem von Beschlägen oder dergleichen Bauteilen.

Dazu sollte einerseits die Gesamtfläche (Summe) aller Anlageflächen 18 der Rippenansätze 16 nicht zu groß sein, damit sich beim Einsenken im Weichstoff die Rippenansätze 16 gut miteinsenken lassen. Dabei sind erfindungsgemäß die Rippenansätze 16 so gestaltet, dass sie bei dieser Anwendung der Schraube mit direktem, versenkendem Einschrauben insbesondere in Holz oder ähnliche Weichstoffe eine Fräswirkung (Schabeffekt) haben. Dies senkt deutlich die Spleißgefahr. Andererseits sind aber die Rippenansätze 16 bezüglich der Flächengröße der Anlageflächen 18 in Abhängigkeit von einer werkstoff-spezifischen Flächenpressung derart groß ausgelegt, dass bei der Anwendung zum Befestigen von Beschlägen oder dergleichen durch Einschrauben in ein Senkloch zwischen den Rippenansätzen 16 und dem jeweiligen Senkloch eine derart bemessene Flächenpressung auftritt, dass Beschädigungen im Bereich des Senkloches vermieden werden. Dazu sollte die Summe der Anlageflächen 18 aller Rippenansätze 16 im Bereich von mindestens 40 % bis maximal etwa 60 % der auf den ganzen Umfang bezogenen kegelförmigen Hüllfläche liegen. Die minimale Größe der Anlageflächen 18 der Rippenansätze 16 von etwa 40 % der Gesamtfläche ist in Fig. 2 dargestellt. Dazu ist die umfängliche Winkelerstreckung der Rippenansätze 16 mit W1 gekennzeichnet, während die Winkelerstreckung der dazwischen liegenden Bereiche mit W2 bezeichnet ist. Im dargestellten Beispiel betragen der Winkel W1 etwa 24° und der Winkel W2 etwa 36°. Somit entspricht W1 etwa 40 % des Gesamtwinkels von 60°. Vorzugsweise sollte die Gesamtgröße aller Anlageflächen 18 aber etwa 50 % der gesamten Hüllfläche betragen. Dies bedeutet, dass dann die Summe der Anlagefläche 18 aller Rippenansätze 16 etwa gleich der Summe der zwischen den Rippenansätzen 16 liegenden Flächen ist.

Die Schraube 1 besteht für die meisten Anwendungen, so auch zur Befestigung von Beschlägen aus Metall (Stahl, Aluminium oder sonstige Buntmetalle), universell aus einem für Schrauben üblichen Stahl.

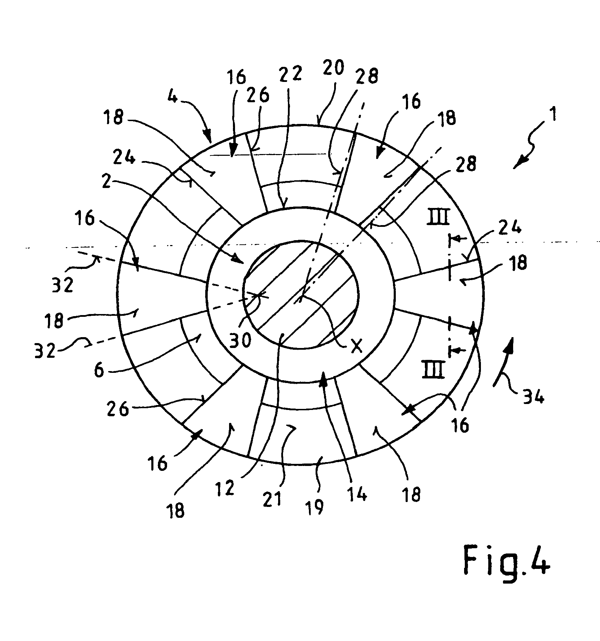

Der Senkkopf 4 weist ausgehend von der Kegelfläche 6 auf seiner dem Gewindeschaft 2 gegenüberliegenden Seite einen überstehenden Umfangsrand 19 mit einem äußeren Umfang 20 auf, der im Vergleich zu der Kegelfläche 6 im Durchmesser größer ist (Fig. 1). Dadurch ist auf der Unterseite zwischen dem Umfangsrand 19 und der Kegelfläche 6 ein Übergang 21 gebildet. Dieser Übergang 21 wird praktisch im Bereich der Rippenansätze "ausgefüllt", so dass sich die Rippenansätze 16 mit den Anlageflächen 18 gemäß Fig. 1 vom Außenumfang 20 entsprechend dem Winkel β bis zu der Kegelfläche 6 erstrecken. Gemäß Fig. 2 erstrecken sich die Rippenansätze 16 ausgehend von dem äußeren Umfang 20 des Senkkopfes 4 im Wesentlichen in radialer Richtung zumindest bis an den Bereich einer axialen Projektion der äußeren Gewindekante des Gewindes 14 des Gewindeschaftes 2. Beim dargestellten Beispiel enden die Rippenansätze 16 etwa an einer durch die axiale Gewindeprojektion bestimmten und damit dem Gewinde-Nenndurchmesser D entsprechenden Kreislinie 22 (Fig. 2 und 4), sie könnten aber auch noch weiter nach innen in Richtung des zylindrischen Kems 12, d. h. in den Gewinde-Hüllbereich hinein verlaufen.

Weiterhin sind bei den dargestellten Ausführungsbeispielen sechs Rippenansätze 16 mit gleichartiger Ausgestaltung und in gleichmässiger, radialsymmetrischer Umfangsverteilung vorgesehen. Die Anzahl der Rippenansätze 16 kann aber auch im Bereich von drei bis beispielsweise acht liegen. Dabei ist jeder Rippenansatz 16 gemäß Fig. 2 und 4 bezüglich der Form seiner Anlagefläche 18 im Wesentlichen als Kreisringausschnitt (Sektor) mit etwa radial verlaufenden Flanken 24, 26 ausgebildet (vergleiche auch Fig. 3). Bei dem in Fig. 4 dargestellten Ausführungsbeispiel verlaufen die Flanken 24, 26 allerdings derart geringfügig "überradial", d. h. von innen nach außen mehr bzw. stärker als bei genau radialen Flanken divergierend, dass jeder Rippenansatz 16 im Vergleich zu einer Ausführung mit genau radial verlaufenden Flanken (wie in Fig. 2 dargestellt und in Fig. 4 anhand von Strichpunktlinien 28 angedeutet) am Innenumfang schmaler (bzw. am Außenumfang breiter) ausgebildet ist. Dadurch liegt im Unterschied zu Fig. 2 gemäß Fig. 4 ein Schnittpunkt 30 von zwei durch die Flanken 24, 26 bestimmten Begrenzungslinien 32 (gestrichelt eingezeichnet) nicht im Achsmittelpunkt X der Schraube (wie dies in Fig. 2 der Fall ist), sondern radial zwischen diesem und dem jeweiligen Rippenansatz 16.

Wie sich weiter aus Fig. 3 ergibt, schließen die den jeweiligen Rippenansatz 16 in Umfangsrichtung begrenzenden Flanken 24, 26 mit der jeweils am Fuß des Rippenansatzes 16 angrenzenden Fläche (Kegelfläche 6) einen Flankenwinkel ϕ größer/gleich 90° ein. Hierbei ist vorzugsweise vorgesehen, dass die bei Drehung in einer Einschraubrichtung (Pfeil 34) nach vorne weisende Flanke 24 einen steileren Flankenwinkel ϕ₁ aufweist, der zwischen 90° und maximal 95° liegt, während die andere Flanke 26 bevorzugt einen flacheren Flankenwinkel ϕ₂ von größer/gleich 95° aufweist. Durch den steileren Flankenwinkel ϕ₁ bildet die vordere Flanke 24 vorteilhafterweise eine Art Fräskante, die die Fräswirkung beim Einsenken verbessert. Der flachere Flankenwinkel ϕ₂ der anderen Flanke 26 ermöglicht ein leichteres Herausdrehen der Senkkopfschraube 1.

In weiterer vorteilhafter Ausgestaltung der Senkkopfschraube 1 weist das Gewinde 14 gemäß Fig. 1 einen Flankenwinkel γ im Bereich um etwa 35° auf. Die Steigung S des Gewindes 14 hängt von dem Gewinde-Nenndurchmesser D ab und beträgt insbesondere etwa 60 % des Nenndurchmessers D.

Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Senkkopfschraube (1) mit einem Gewindeschaft (2) und einem Senkkopf (4), der eine in Richtung auf den Gewindeschaft (2) mit einem Senkwinkel (α) zulaufende Kegelfläche (6) aufweist, wobei die Kegelfläche (6) mehrere über den Umfang verteilt angeordnete, gemeinsam eine kegelförmige Hüllfläche mit einem Konuswinkel (β) definierende Rippenansätze (16) aufweist, wobei der Senkwinkel (α) der Kegelfläche (6) kleiner als der Konuswinkel (β) der Rippenansätze (16) ist, und wobei die Rippenansätze (16) derart gestaltet sind, dass sie bei einer Anwendung der Schraube mit direktem, versenkendem Einschrauben in einen Weichstoff, wie insbesondere Holz, eine Fräswirkung haben,
**dadurch gekennzeichnet, dass**
die Rippenansätze (16) äußere, die kegelförmige Hüllfläche definierende Anlageflächen (18) aufweisen, die bezüglich ihrer Flächengröße in Abhängigkeit von einer werkstoff-spezifischen Flächenpressung derart groß ausgelegt sind, dass die Summe der Anlageflächen (18) aller Rippenansätze (16) im Bereich von mindestens 40 % bis etwa 60 % der auf den ganzen Umfang bezogenen kegelförmigen Hüllfläche liegt und bei einer Anwendung der Schraube zum Befestigen von Beschlägen oder dergleichen durch Einschrauben in ein Senkloch zwischen den Rippenansätzen (16) und dem jeweiligen Senkloch eine bestimmte, Oberflächenbeschädigungen vermeidende Flächenpressung auftritt.

2. Senkkopfschraube nach Anspruch 1,
**dadurch gekennzeichnet, dass** dieSummederAnlageflächen (18) aller Rippenansätze (16) etwa gleich der Summe der zwischen den Rippenansätzen (16) liegenden Flächen ist.

3. Senkkopfschraube nach Anspruch 1 oder 2,
**dadurch gekennzeichnet, dass** der Senkwinkel (α) etwa im Bereich von 50° bis 60°, insbesondere von 53° bis 55°, liegt.

4. Senkkopfschraube nach einem der Ansprüche 1 bis 3,
**dadurch gekennzeichnet, dass** der Konuswinkel (β) etwa 90° beträgt.

5. Senkkopfschraube nach einem der Ansprüche 1 bis 4,
**dadurch gekennzeichnet, dass** dieRippenansätze(16)sich ausgehend etwa von einem äußeren Umfang (20) des Senkkopfes (4) im Wesentlichen in radialer Richtung zumindest bis an den Bereich einer axialen Projektion (22) eines Gewindes (14) des Gewindeschaftes (2) erstrecken.

6. Senkkopfschraube nach einem der Ansprüche 1 bis 5,
**dadurch gekennzeichnet, dass** dieRippenansätze(16)mit gleichartiger Ausgestaltung und mit einer Anzahl von drei bis acht, insbesondere sechs, in gleichmäßiger, radialsymmetrischer Umfangsverteilung vorgesehen sind.

7. Senkkopfschraube nach einem der Ansprüche 1 bis 6,
**dadurch gekennzeichnet, dass** jederRippenansatz(16) bezüglich seiner Anlagefläche (18) im Wesentlichen als Kreisringausschnitt mit etwa radial verlaufenden Flanken (24, 26) ausgebildet ist.

8. Senkkopfschraube nach einem der Ansprüche 1 bis 7,
**dadurch gekennzeichnet, dass** jederRippenansatz(16)in Umfangsrichtung von zwei Flanken (24, 26) begrenzt ist, wobei die Flanken (24, 26) mit der jeweils fußseitig angrenzenden Fläche einen Flankenwinkel (ϕ₁ ; ϕ₂) größer/gleich 90° einschließen.

9. Senkkopfschraube nach Anspruch 8,
**dadurch gekennzeichnet, dass** die bei Drehung in einer Einschraubrichtung (34) nach vorne weisende Flanke (24) einen Flankenwinkel (ϕ₁) aufweist, der zwischen 90° und 95° liegt, während die andere Flanke (26) bevorzugt einen Flankenwinkel (ϕ₂) von größer/gleich 95° aufweist.

10. Senkkopfschraube nach einem der Ansprüche 1 bis 9,
**dadurch gekennzeichnet, dass** derGewindeschaft(2)aus einem zumindest bereichsweise zylindrischen Kem (12) und einem als Erhebung über den Kem (12) verlaufenden Gewinde (14) besteht.

11. Senkkopfschraube nach Anspruch 10,
**dadurch gekennzeichnet, dass** das Gewinde (14) einen Flankenwinkel (γ) von etwa 35° aufweist.

12. Senkkopfschraube nach Anspruch 10 oder 11,
**dadurch gekennzeichnet, dass** das Gewinde (14) eine Steigung (S) aufweist, die von einem Gewinde-Nenndurchmesser (D) abhängt und insbesondere etwa 60 % des Nenndurchmessers (D) beträgt.

13. Senkkopfschraube nach einem der Ansprüche 1 bis 12,
**dadurch gekennzeichnet, dass** der Senkkopf (4) einen Innenkraftangriff (10) für ein Drehwerkzeug insbesondere in Form eines Kreuzschlitzes oder eines Innenstemangriffis, vorzugsweise mit Schlüsselführung, aufweist.

## Claims

1. A countersunk screw (1) comprising a threaded shank (2) and a countersunk head (4) which has a conical surface (6) tapering towards the threaded shank (2) at a countersinking angle (α), the conical surface (6) having several ribbed projections (16) arranged so as to be distributed over the periphery and together defining a conical enveloping surface with a cone angle (β), the countersinking angle (α) of the conical surface (6) being smaller than the cone angle (β) of the ribbed projections (16), and the ribbed projections (16) being shaped in such a way that, in an application of the screw with direct, countersinking screwing into a soft material, especially such as wood, they have a milling effect,
**characterised in that**
the ribbed projections (16) have outer contact surfaces (18) defining the conical enveloping surface, which, with respect to their surface size, are dimensioned in dependence on a material-specific surface pressure such that the sum of the contact surfaces (18) of all the ribbed projections (16) lies within the range from at least 40 % to about 60 % of the conical enveloping surface related to the whole periphery, and, in an application of the screw for fastening metal fittings or the like by screwing into a sinkhole, a certain surface pressure occurs between the ribbed projections (16) and the respective sinkhole which avoids surface damage.

2. A countersunk screw according to Claim 1,
**characterised in that** the sum of the contact surfaces (18) of all the ribbed projections (16) is approximately equal to the sum of the surfaces located between the ribbed projections (16).

3. A countersunk screw according to Claim 1 or 2,
**characterised in that** the countersinking angle (α) lies approximately within the range from 50° to 60°, particularly 53° to 55°.

4. A countersunk screw according to one of Claims 1 to 3,
**characterised in that** the cone angle (β) is about 90°.

5. A countersunk screw according to one of Claims 1 to 4,
**characterised in that** the ribbed projections (16) extend substantially in the radial direction, starting approximately from an outer periphery (20) of the countersunk head (4), at least up to the region of an axial projection (22) of a thread (14) of the threaded shank (2).

6. A countersunk screw according to one of Claims 1 to 5,
**characterised in that** the ribbed projections (16) are provided in similar design and in a number from three to eight, particularly six, in uniform, radially symmetrical peripheral distribution.

7. A countersunk screw according to one of Claims 1 to 6,
**characterised in that** each ribbed projection (16) with regard to its contact surface (18) is designed substantially as a circular ring segment with approximately radially extending flanks (24, 26).

8. A countersunk screw according to one of Claims 1 to 7,
**characterised in that** each ribbed projection (16) is bounded in the peripheral direction by two flanks (24, 26), the flanks (24, 26) forming with the respectively adjoining surface on the base side a flank angle (ϕ₁; ϕ₂) greater than/equal to 90°.

9. A countersunk screw according to Claim 8,
**characterised in that** the flank (24) directed forwards during rotation in a screwing-in direction (34) has a flank angle (ϕ₁) which lies between 90° and 95°, while the other flank (26) preferably has a flank angle (ϕ₂) of greater than/equal to 95°.

10. A countersunk screw according to one of Claims 1 to 9,
**characterised in that** the threaded shank (2) consists of a core (12) which is cylindrical at least in regions and a thread (14) extending as an elevation over the core (12).

11. A countersunk screw according to Claim 10,
**characterised in that** the thread (14) has a flank angle (γ) of about 35°.

12. A countersunk screw according to Claim 10 or 11,
**characterised in that** the thread (14) has a pitch (S) which depends on a nominal thread diameter (D) and in particular amounts to about 60 % of the nominal diameter (D).

13. A countersunk screw according to one of Claims 1 to 12,
**characterised in that** the countersunk head (4) has a force application socket (10) for a turning tool particularly in the form of a cross recess or a star application socket, preferably with key guide.

## Revendications

1. Vis à tête fraisée (1) comportant une tige filetée (2) et une tête fraisée (4), qui comporte une face conique (6) se rétrécissant en direction de la tige filetée (2) en formant un angle de fraisure (α), la face conique (6) étant munie de plusieurs saillies en forme de liernes (16), réparties sur la surface périphérique et définissant conjointement une surface d'enveloppe conique avec un angle de cône (β), l'angle de fraisure (α) de la face conique (6) étant inférieur à l'angle de cône (β) formé par les saillies en forme de liernes (16), et les saillies en forme de liernes (16) étant configurées de telle sorte que, en cas d'utilisation de la vis par un vissage direct plongeant dans un matériau mou, tel que le bois en particulier, elles exercent une action de fraisage, **caractérisée en ce que** les saillies en forme de liernes (16) ont des faces d'appui (18) extérieures, qui définissent la surface d'enveloppe conique et qui, par rapport à leur dimension superficielle en fonction d'une pression superficielle spécifique à la matière, sont dimensionnées de telle sorte que la somme des faces d'appui (18) de toutes les saillies (16) se situe dans une plage de 40 % minimum à environ 60 % de la surface d'enveloppe conique par rapport à l'ensemble de la surface périphérique et, en cas d'utilisation de la vis pour fixer des ferrures ou éléments analogues par vissage dans un trou fraisé, il se produit entre les saillies (16) et le trou fraisé concerné une pression superficielle déterminée empêchant des endommagements de la surface.

2. Vis à tête fraisée selon la revendication 1, **caractérisée en ce que** la somme des faces d'appui (18) de toutes les saillies en forme de liernes (16) est à peu près égale à la somme des surfaces situées entre les saillies (16).

3. Vis à tête fraisée selon la revendication 1 ou 2, **caractérisée en ce que** l'angle de fraisure (α) se situe sensiblement dans la plage de 50° à 60°, en particulier de 53° à 55°.

4. Vis à tête fraisée selon l'une quelconque des revendications 1 à 3, **caractérisée en ce que** l'angle de cône (β) est égal à environ 90°.

5. Vis à tête fraisée selon l'une quelconque des revendications 1 à 4, **caractérisée en ce que** les saillies en forme de liernes (16) s'étendent à peu près à partir d'une surface périphérique extérieure (20) de la tête fraisée (4) sensiblement dans le sens radial au moins jusque dans la zone d'une projection axiale (22) d'un filet (14) de la tige filetée (2).

6. Vis à tête fraisée selon l'une quelconque des revendications 1 à 5, **caractérisée en ce que** les saillies en forme de liernes (16) sont prévues avec une configuration identique et au nombre de trois à huit, en particulier six, réparties uniformément et en symétrie radiale sur le pourtour.

7. Vis à tête fraisée selon l'une quelconque des revendications 1 à 6, **caractérisée en ce que** chaque saillie en forme de lierne (16) est conçue par rapport à sa face d'appui (18) sensiblement sous la forme d'une découpe annulaire circulaire avec des flancs (24, 26) orientés à peu près radialement.

8. Vis à tête fraisée selon l'une quelconque des revendications 1 à 7, **caractérisée en ce que** chaque saillie en forme de lierne (16) est délimitée dans le sens périphérique par deux flancs (24, 26), les flancs (24, 26) formant un pied avec la surface adjacente respective un angle de chanfrein (ϕ₁ ; ϕ₂) supérieur ou égal à 90°.

9. Vis à tête fraisée selon la revendication 8, **caractérisée en ce que** le flanc (24), orienté vers l'avant pendant une rotation dans le sens de vissage (34), a un angle de chanfrein (ϕ₁) qui se situe entre 90° et 95°, alors que l'autre flanc (26) a de préférence un angle de chanfrein (ϕ₂) supérieur ou égal à 95°.

10. Vis à tête fraisée selon l'une quelconque des revendications 1 à 9, **caractérisée en ce que** la tige filetée (2) est formée par un noyau (12) cylindrique au moins par zones et un filet (14) réalisé en saillie sur le noyau (12).

11. Vis à tête fraisée selon la revendication 10, **caractérisée en ce que** le filet (14) a un angle de filet (γ) de 35° environ.

12. Vis à tête fraisée selon la revendication 10 ou 11, **caractérisée en ce que** le filet (14) a un pas de vis (S), qui dépend du diamètre nominal (D) du filet et est égal en particulier à environ 60 % du diamètre nominal (D).

13. Vis à tête fraisée selon l'une quelconque des revendications 1 à 12, **caractérisée en ce que** la tête fraisée (4) comporte une zone d'entraînement intérieure (10) pour un outil de vissage, en particulier sous la forme d'une fente cruciforme ou d'une zone d'entraînement intérieure en étoile, de préférence avec un pivot guide-clé.
